# EUROPÄISCHE PATENTSCHRIFT

(11) **EP 0 774 742 B1**
(45) Veröffentlichungstag und Bekanntmachung des Hinweises auf die Patenterteilung: **30.05.2001**
(21) Anmeldenummer: 96117276.4
(22) Anmeldetag: 28.10.1996
(51) Int. Cl.: G08B 17/113, G08B 17/10

(54) **Branddetektor**
Fire detector
Détecteur d'incendie

(30) Priorität: 14.11.1995 DE 29518042 U
(43) Veröffentlichungstag der Anmeldung: 21.05.1997
(73) Patentinhaber: Wagner Alarm- und Sicherungssysteme GmbH, 30853 Langenhagen (DE)
(72) Erfinder: Wagner, Ernst Werner, 29308 Winsen (DE)
(74) Vertreter: Meissner, Bolte & Partner

(56) Entgegenhaltungen:
- DE-A- 2 632 876
- DE-A- 2 846 310
- FR-A- 2 551 215
- FR-A- 2 670 010

## Beschreibung

Die vorliegende Erfindung betrifft einen Branddetektor, mit einem Gehäuse und einem in dem Gehäuse angeordneten Sensor zum Erkennen einer Brandkenngröße, beispielsweise Rauch, und mit einer Lufteintrittsöffnung in einer Gehäusewand, durch die eine Luftprobe eines zu überwachenden Raumes oder eines zu überwachenden elektronischen Gerätes in das Gehäuse (1) eintritt und durch eine Luftaustrittsöffnung wieder austritt.

Branddetektoren dieser Art sind bekannt und dienen der Frühesterkennung von Bränden bereits in ihrer Entstehungsphase. Typische Anwendungsbereiche für solche Branddetektoren sind Räume mit hochwertigen oder wichtigen Einrichtungen, wie z.B. Räume mit EDV-Anlagen in Banken oder dergleichen. Zu diesem Zweck werden der Raumluft oder der Gerätekühlluft ständig repräsentative Teilmengen entnommen, die im folgenden als "Luftprobe" bezeichnet werden. Ein probates Mittel zum Entnehmen dieser Luftproben und zum Zuführen zu dem Gehäuse des Branddetektors sind Rohrleitungen, die beispielsweise unter der Raumdecke befestigt sind und zu der Lufteintrittsöffnung in dem Gehäuse des Branddetektors führen, und die die Luftprobe durch Löcher einsaugen, welche in den Rohrleitungen vorgesehen sind.

Unter dem Begriff "Brandkenngröße" werden physikalische Größen verstanden, die in der Umgebung eines Entstehungsbrands meßbaren Veränderungen unterliegen, z.B. die Umgebungstemperatur, der Feststoff- oder Flüssigkeits- oder Gasanteil in der Umgebungsluft (Bildung von Rauch-Partikeln oder Rauch-Aerosolen oder Bildung von Dampf) oder die Umgebungsstrahlung.

Um einen Brand möglichst früh erkennen zu können, ist es von großer Wichtigkeit, die Raumluftprobe dem Sensor möglichst direkt zuzuführen, damit sie nicht mehr verdünnt und dadurch das Überwachungsergebnis verfälscht wird. Als Sensor kommen beispielsweise punktförmige Rauchmelder zur Anwendung, die in der handelsüblichen Form einen etwa 3 cm hohen Sockel aufweisen, und deren Sensorteil mehrere Luftschlitze zur Aufnahme der zugeführten Luftprobe besitzt.

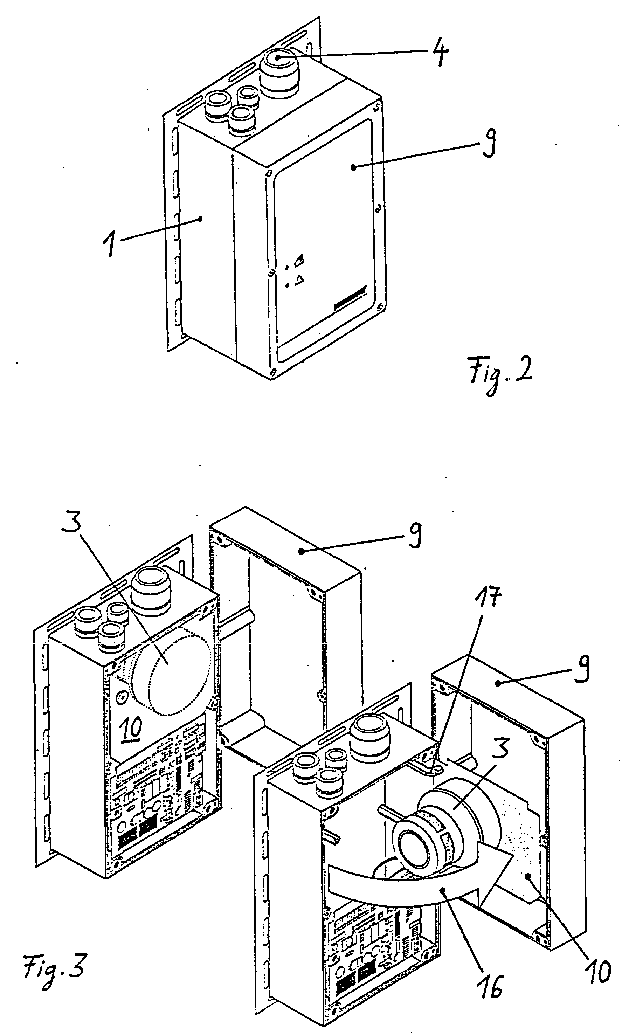

Die FR 2 670 010 A offenbart einen Luftstromsensor in einer aspirativen Brandmeldeanlage, der bekanntermaßen der Überwachung der Kontinuität des Luftstromes dient, welcher einem Rauchmelder zugeführt wird. Dieser Luftstromsensor ist - wie aus Fig. 2 ersichtlich und auf Seite 3, Zeilen 7 bis 9 beschrieben - direkt im Luftstrom angeordnet. Das ist allerdings für einen Luftstromsensor, bei dem das Maß der Abkühlung durch den Luftstrom ein Maß der darüber hinwegstreichenden Luftmenge ist, selbstverständlich. Es handelt sich bei einem Luftstromsensor schließlich lediglich um eine gedruckte Schaltung (circuit imprimée), die ohne weiteres direkt im Luftstrom angeordnet werden kann und auch regelmäßig so angeordnet wird.

Die FR 2 551 215 A (vgl. insbesondere Fig. 5) betrifft eine asprirative Brandmeldeanlage mit einem Branddetektor, der ein Gehäuse und einen darin angeordneten Sensor zum Erkennen von Rauch aufweist, und mit einer Lufteintrittsöffnung in einer Gehäusewand, durch die eine Luftprobe in das Gehäuse eintritt, und mit einer Luftaustrittsöffnung in einer anderen Gehäusewand, durch welche die Luftprobe wieder aus dem Gehäuse austritt. Der in dieser Druckschrift beschriebenen Erfindung lag die Aufgabenstellung zugrunde, eine Verdünnung der angesaugten Luftprobe zu verhindern. Hierzu weist das Gehäuse einen 30 Mal größeren Querschnitt als die Zuleitungen auf, mit dem Ziel, Verwirbelungen in dem Gehäuse zu vermeiden. Darüber hinaus ist vorgesehen, daß der Sensor einen von der Luftstromgeschwindigkeit abhängigen Abstand von der Lufteintrittsöffnung aufweist (vgl. Seite 6, Zeilen 9 bis 18). Ein Nachteil dieses bekannten Branddetektors ist es allerdings, daß sich die angesaugte Luftprobe und eventuell mitgeführte Rauchpartikel zunächst im gesamten Innenvolumen des Gehäuses ausbreiten muß, bevor die Rauchpartikel den Melder erreichen.

Aufgabe der vorliegenden Erfindung ist es, die Sensibilität des eingangs beschriebenen Branddetektors weiter zu steigern, bei einfacher Montage und Wartung.

Diese Aufgabe wird erfindungsgemäß dadurch gelöst, daß bei dem eingangs beschriebenen Branddetektor die Luftschlitze des Sensors direkt im Hauptluftstrom zwischen der Eintrittsöffnung und der Austrittsöffnung, und in unmittelbarer Nähe der Eintrittsöffnung angeordnet sind, und daß der Sensor an einem schwenkbar an dem Gehäuse befestigten Gehäusedeckel in den Luftstrom hineinhängend befestigt ist.

Die Aufgabe wird erfindungsgemäß auch dadurch gelöst, daß die Luftschlitze des Sensors direkt im Hauptluftstrom zwischen der Eintrittsöffnung und der Austrittsöffnung und in unmittelbarer Nähe der Eintrittsöffnung angeordnet sind, und daß der Sensor an einer aus dem Gehäuse herausschwenkbaren Platte in den Luftstrom hineinhängend befestigt ist.

Der große Vorteil dieser Lösungen besteht darin, daß die zugeführte Raumluftprobe auf ihrem - meist linearen - Weg von der Lufteintrittsöffnung zur Austrittsöffnung ohne weitere Verdünnung durch den Sensor geführt wird. Durch diese Hintereinanderreihung des Lufteintritts und des Sensors und des Luftaustritts sowie durch die unmittelbare Nähe der Luftschlitze des Sensors an der Lufteintrittsöffnung wird eine wesentlich höhere Ansprechempfindlichkeit erzielt. Ein weiterer wesentlicher Vorteil der erfindungsgemäßen Lösungen wird wie folgt erläutert: Eingangs wurde bereits geschildert, daß als Rauchsensoren im wesentlichen punktförmige Rauchmelder zur Anwendung kommen, die in das Detektorgehäuse eingesetzt werden. Das Problem bei der Verwendung dieser handelsüblichen Punktmelder besteht darin, daß sie einen etwa 3 cm hohen Sockel aufweisen, und daß die Luftschlitze des Punktmelders relativ hoch, nämlich zwischen 3 und 7 cm über der Basis angeordnet sind. Die Rohrleitungen zum Zuführen der Raumluftproben werden demgegenüber durch Schellen in geringem Abstand zur Wand zu dem Detektor geführt. Das bedingt auch einen niedrigen Eintritt der Rohrleitung in das Gehäuse des Detektors, also eine niedrige Höhe der Lufteintrittsöffnung über dem Boden des Detektorgehäuses, da Krümmungen der Rohrleitungen aufgrund der damit verbundenen negativen Beeinflussung der Luftströmung vermieden werden sollen. Wird somit der Sensor auf dem Boden des Gehäuses stehend montiert, befindet sich der Sensorteil des Punktmelders nicht direkt im Hauptluftstrom der Raumluftprobe. Dieses Problem wird durch die erfindungsgemäßen Lösungen beseitigt. In beiden Fällen wird der Punktmelder "auf dem Kopf" in dem Detektorgehäuse angeordnet, wodurch eine exakte Positionierung der Luftschlitze des Sensors direkt im Hauptluftstrom möglich ist.

Vorteilhafte Weiterbildungen der Erfindung sind in den Unteransprüchen angegeben.

Um einen aktiven Branddetektor zu erhalten, ist vorzugsweise ein Gebläse in dem Gehäuse des Branddetektors vorgesehen, das die Luftprobe durch die Eintrittöffnung und die Luftschlitze des Sensors zieht. Auch bei dieser Weiterbildung besteht der große Vorteil darin, daß durch die im wesentlichen lineare Hintereinanderreihung des Lufteintritts, des Sensors und des Lüfters die Raumluftprobe von dem Lüfter durch den Sensor gezogen wird und sich nicht verdünnt. Im Gegensatz dazu benutzen bekannte Branddetektoren das Gebläse dazu, den Sensor anzublasen, was zu einer Verdünnung der Luftprobe führt.

Im folgenden wird ein bevorzugtes Ausführungsbeispiel der Erfindung anhand einer Zeichnung näher erläutert.

### Es zeigen:

- Fig. 1: eine schematische Schnittdarstellung eines Branddetektors an der Wand eines Raumes:
- Fig. 2: eine perspektivische Ansicht des Branddetektorgehäuses; und
- Fig. 3: eine der Fig. 2 ähnliche Darstellung, mit geöffnetem Gehäusedeckel und mit herausgeschwenktem Sensorteil.

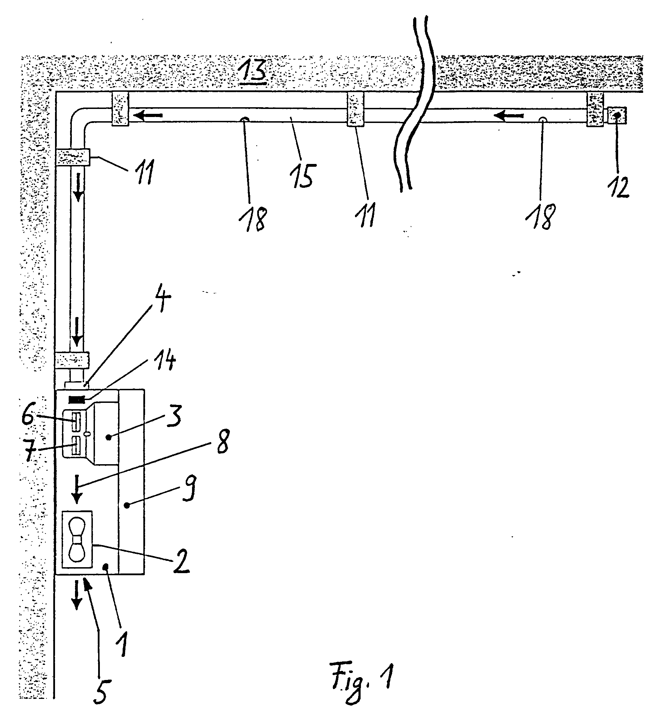

Fig. 1 zeigt das Gehäuse 1 eines Branddetektors, das an der Wand 13 einer Raumecke befestigt ist. An der Decke des Raumes ist eine Rohrleitung 15 mit Schellen 11 befestigt, die sich an der senkrechten Raumwand bis zu dem Detektorgehäuse 1 fortsetzt. Die Rohrleitung 15 weist im Deckenbereich Löcher 18 auf, durch welche repräsentative Teilmengen der aufsteigenden Raumluft in die Rohrleitung 15 gelangen. An ihrem freien Ende ist die Rohrleitung 15 durch eine Kappe 12 verschlossen. In Strömungsrichtung mündet die Rohrleitung durch eine Lufteintrittsöffnung 4 in das Gehäuse 1 des Detektors. Die Pfeile in der Rohrleitung 15 kennzeichnen die Richtung der Luftströmung, welche die Luftprobe durch die Lufteintrittsöffnung 4 in das Gehäuse 1 führt, wo sie als Hauptluftstrom 8 dargestellt ist, der durch eine Luftaustrittsöffnung 5 wieder aus dem Gehäuse 1 austritt.

Das Gehäuse 1 des Branddetektors weist als in diesem Zusammenhang wesentliche Bauteile einen Sensor 3 und ein Gebläse 2 auf. Der Sensor 3 besitzt im oberen Bereich Luftschlitze 6, 7, durch welche das Gebläse 2 den Hauptluftstrom 8 zieht. Ein Luftstromsensor 14 überwacht hierbei die Kontinuität der Luftströmung.

Fig. 2 zeigt eine perspektivische Außenansicht des Branddetektors mit seinem Gehäuse 1, dem Gehäusedeckel 9 und der Lufteintrittsöffnung 4. Neben der Lufteintrittsöffnung befinden sich weitere gasdichte Durchlässe für elektrische Anschluß- und Signalleitungen.

Fig. 3 zeigt den Branddetektor gemäß Fig. 2 mit abgenommenem Gehäusedeckel 9, und zwar in der hinteren Darstellung mit eingeschwenktem und in der vorderen Darstellung mit ausgeschwenktem Sensor 3. Unterhalb des Sensors befindet sich eine hier nicht weiter interessierende Schaltplatine. Der Sensor 3 ist mit seinem Sockel an einer Platte 10 befestigt, die ihrerseits in Richtung des Schwenkpfeils 16 um ein Gelenk 17 ausschwenkbar in dem Gehäuse befestigt ist. Diese schwenkbare Anordnung des Sensors 3 hat den Vorteil, daß der Sensor zu Wartungszwecken gut zugänglich ist.

## Patentansprüche

1. Branddetektor, mit einem Gehäuse (1) und einem in dem Gehäuse (1) angeordneten Sensor (3) zum Erkennen einer Brandkenngröße, beispielsweise Rauch, und mit einer Lufteintrittsöffnung (4) in einer Gehäusewand, durch die eine Luftprobe in das Gehäuse (1) eintritt und durch eine Luftaustrittsöffnung (5) wieder austritt,
dadurch gekennzeichnet,
daß die Luftschlitze (6, 7) des Sensors (3) direkt im Hauptluftstrom (8) zwischen der Eintrittsöffnung (4) und der Austrittsöffnung (5) und in unmittelbarer Nähe der Eintrittsöffnung (4) angeordnet sind, und daß der Sensor (3) an einem schwenkbar an dem Gehäuse (1) befestigten Gehäusedeckel (9) in den Luftstrom (8) hineinhängend befestigt ist.

2. Branddetektor, mit einem Gehäuse (1) und einem in dem Gehäuse (1) angeordneten Sensor (3) zum Erkennen einer Brandkenngröße, beispielsweise Rauch, und mit einer Lufteintrittsöffnung (4) in einer Gehäusewand, durch die eine Luftprobe in das Gehäuse (1) eintritt und durch eine Luftaustrittsöffnung (5) wieder austritt,
dadurch gekennzeichnet,
daß die Luftschlitze (6, 7) des Sensors (3) direkt im Hauptluftstrom (8) zwischen der Eintrittsöffnung (4) und der Austrittsöffnung (5) und in unmittelbarer Nähe der Eintrittsöffnung (4) angeordnet sind, und daß der Sensor (3) an einer aus dem Gehäuse (1) herausschwenkbaren Platte (10) in den Luftstrom (8) hineinhängend befestigt ist.

3. Branddetektor nach Anspruch 1 oder 2,
gekennzeichnet durch
ein Gebläse (2) in dem Gehäuse (1), das die Luftprobe durch die Eintrittsöffnung (4) und die Luftschlitze (6, 7) des Sensors (3) zieht.

4. Brandmeldeanlage mit einem Branddetektor nach einem der Ansprüche 1 bis 3, bei der die Luftprobe dem Sensor (3) durch Rohrleitungen (15) zugeführt wird, welche an die Lufteintrittsöffnung (4) angeschlossen sind.

## Claims

1. Fire detector, comprising a housing (1) and a sensor (3) arranged in the housing (1) for detecting a fire parameter, e.g. smoke, and comprising an air-inlet opening (4) in a housing wall through which an air sample enters the housing (1) and exits again through an air-outlet opening (5), characterised in that the air slots (6, 7) of the sensor (3) are arranged directly in the main air stream (8) between the inlet opening (4) and the outlet opening (5) and in the immediate vicinity of the inlet opening (4) and that the sensor (3) is secured to a housing cover (9) pivotably secured to the housing (1) in such a manner that it is suspended in the air stream (8).

2. Fire detector, comprising a housing (1) and a sensor (3) arranged in the housing (1) for detecting a fire parameter, e.g. smoke, and comprising an air-inlet opening (4) in a housing wall through which an air sample enters the housing (1) and exits again through an air-outlet opening (5), characterised in that the air slots (6, 7) of the sensor (3) are arranged directly in the main air stream (8) between the inlet opening (4) and the outlet opening (5) and in the immediate vicinity of the inlet opening (4) and that the sensor (3) is secured to a plate (10) which can be pivoted out of the housing (1) in such a manner that it is suspended in the air stream (8).

3. Fire detector according to claim 1 or claim 2, characterised by a blower (2) in the housing (1) which draws the air sample through the inlet opening (4) and the air slots (6, 7) of the sensor (3).

4. Fire-alarm system comprising a fire detector according to one of claims 1 to 3, in which the air sample is fed to the sensor (3) by means of pipes (15) connected to the air-inlet opening (4).

## Revendications

1. Détecteur d'incendie comportant un boîtier (1) et un capteur (3) disposé dans le boîtier (1) et servant à identifier une grandeur caractéristique d'incendie, par exemple de la fumée, et comportant une ouverture d'entrée d'air (4) située dans une paroi du boîtier et par laquelle un échantillon d'air pénètre dans le boîtier (1) et ressort à nouveau par une ouverture de sortie d'air (5), caractérisé en ce
que les fentes de passage d'air (6,7) du capteur (3) sont disposées directement dans le courant d'air principal (8) entre l'ouverture d'entrée (4) et l'ouverture de sortie (5) et à proximité directe de l'ouverture d'entrée (4), et que le capteur (3) est fixé en étant suspendu dans le courant d'air (8) à un couvercle (9) du boîtier, qui est fixé de manière à pouvoir pivoter sur le boîtier (1).

2. Détecteur d'incendie comportant un boîtier (1) et un capteur (3) disposé dans le boîtier (1) et servant à identifier une grandeur caractéristique d'incendie, par exemple de la fumée, et comportant une ouverture d'entrée d'air (4) située dans une paroi du boîtier et par laquelle un échantillon d'air pénètre dans le boîtier (1) et ressort à nouveau par une ouverture de sortie d'air (5), caractérisé en ce
que les fentes de passage d'air (6,7) du capteur (3) sont disposées directement dans le courant d'air principal (8) entre l'ouverture d'entrée (4) et l'ouverture de sortie (5) et à proximité directe de l'ouverture d'entrée (4), et que le capteur (3) est fixé en étant suspendu dans le courant d'air (8) à une plaque (10) pouvant pivoter vers l'extérieur du boîtier (1).

3. Détecteur d'incendie selon la revendication 1 ou 2, caractérisé en ce qu'il comporte
un ventilateur (2) qui est situé dans le boîtier (1) et aspire l'échantillon d'air à travers l'ouverture d'entrée (4) et à travers les fentes de passage d'air (6,7) du capteur (3).

4. Installation d'avertissement d'incendie comportant un détecteur d'incendie selon l'une des revendications 1 à 3, dans laquelle l'échantillon d'air est amené au capteur (3) au moyen de conduites tubulaires (15), qui sont raccordées à l'ouverture d'entrée d'air (4).
